# EUROPEAN PATENT APPLICATION

(11) **EP 1 283 466 A1**
(43) Date of publication of application: **12.02.2003**
(21) Application number: 01410098.6
(22) Date of filing: 06.08.2001
(51) Int. Cl.: G06F 9/50

(54) **Management system for a cluster**

(71) Applicant: Hewlett-Packard Company (a Delaware corporation), Palo Alto, CA 94304 (US)
(72) Inventor: Romagnoli, Emmanuel, 38130 Echirolles (FR)
(74) Representative: Lloyd, Richard Graham (GB)

(57) **Abstract**

The invention provides for a cluster management system, including:
a. cluster control and coordination means, adapted to:
e. receive user and job information via a user interface said interface adapted to both operate in a network environment and to provide a interface by which a user manages one or more jobs running on the cluster and to communicate user and job information to the cluster;
f. coordinate the operation of the components which constitute the cluster management system;
g. schedule jobs for running on nodes of the cluster;
h. manage the distribution of the jobs to the nodes of the cluster; and
b. messaging means adapted to communicate data related to the job between the user and the cluster. The invention also provides for a method of operating a cluster management system and a user interface adapted to operate a cluster management system.

## Description

### Technical Field

The present invention relates to management systems, methods and apparatus for homogeneous and/or heterogeneous aggregates of computers. More particularly, although, not exclusively, this invention relates to management systems, methods and apparatus for cluster-based computational resources. This invention also relates to improved management, scheduling and access systems, methods and apparatus that enhance user accessibility to, and operation of, a local or remote cluster. The invention can also be applied to networks or otherwise grouped computing resources which are spatially distributed and notionally clustered by reference to their use in a particular task.

### Background Art

Improvements in microprocessors, memory, buses, high-speed networks and software have made it possible to assemble groups of relatively inexpensive commodity-off-the-shelf (COTS) components having processing power rivaling that of supercomputers.

This has had the effect of pushing development in parallel computing away from specialized platforms such as the Cray/SGI to cheaper, general-purpose systems or clusters consisting of loosely coupled components built from single or multi-processor workstations or PCs. Such an approach can provide a substantial advantage, as it is now possible to build relatively inexpensive platforms that are suitable for a large class of applications and workloads.

Inter-processor communication in the cluster is provided by a network. Applications that are distributed across the processors of the cluster use either message passing or network shared memory for communication. Programs are often parallelised using MPI message-passing systems for inter-processor communication.

It has also been proposed to use conventionally networked computing resources to carry out cluster-style computational tasks. According to a version of this model, jobs are distributed across a number of computers in order to exploit idle time, for example while a network of PCs is unused out of business hours. Discussions related to clusters may be applied equally to loosely coupled heterogeneous networks of computers.

To the present time there have existed a number of significant obstacles to the wider acceptance and use of clusters. These include the intrinsic cluster operating system architecture, the user interface and the ease of access to the cluster functionality. These will be discussed in turn.

An important aspect of a cluster system is the way in which the management system is implemented, in particular, the user interface. Most presently implemented systems require that the user be physically present at the site where the cluster is installed or at a special access point to submit his or her job. The user may also need to be present, or remain connected, while waiting for the results of the computing job. This problem is compounded by the fact that standard user-connection methods such as SSH, telnet and rlogin generally cannot penetrate firewalls. Firewalls are ubiquitous and therefore this forces the user to access the cluster from behind the firewall or other specifically enabled or secure access point. This may not be feasible if the cluster is to be used by physically remote users.

A further problem with known cluster systems is that the management interface is generally user-hostile with the management and access functions and commands being input by means of a command-line interface. This can present a significant difficulty to users from disciplines that are not substantially computer-oriented such as the biological or human sciences. Many users from such backgrounds are unfamiliar with the command-line interface and are more experienced with GUI style interfaces such as Windows, X-windows or similar.

Some work has been done on implementing windows-based GUI interfaces to clusters. However, these have resulted in quite simple interfaces and usually still require a relatively high degree of familiarity with the more technical aspects of cluster management and operation. Further, most cluster architectures have been implemented in C or C++ for unix-based systems because these operating systems provide remote shell functionality. There exist no practical systems which present a user with a standard interface, for example, by means of a website.

It is an object of the present invention to overcome or at least ameliorate a number ofthe abovementioned problems and provide an effective and usable computer aggregate or cluster management interface which allows, amongst other things, remote access, secure operation and the ability to more utilize the computational power of the cluster in a more efficient and cost-effective manner.

### Disclosure of the Invention

In one aspect the invention provides for a cluster management system, including:
(a) cluster control and coordination means, adapted to:
   (i) receive user and job information via a user interface said interface adapted to provide a interface by which a user manages one or more jobs running on the cluster and to communicate user and job information to the cluster;
   (ii) coordinate the operation of the components which constitute the cluster management system;
   (iii) schedule jobs for running on nodes of the cluster;
   (iv) manage the distribution of the jobs to the nodes of the cluster; and
(b) messaging means adapted to communicate data related to the job between the user and the cluster.

The user interface is preferably adapted to operate in a network environment.

The cluster management system may include a cluster management database means adapted to dynamically store information related to the operation of the cluster and cluster management system.

The information may include information about users, scheduling information, jobs and similar.

The cluster control and coordination means is preferably adapted to allow communication with the user interface through a firewall.

The cluster management system may use a HTTP server, which is adapted to allow communication with the user interface, which includes at least one servlet, the servlet adapted to receive external requests from the user interface and communicate with the cluster management database means to store information about the user, jobs and the like.

The servlet is preferably adapted to communicate with a job engine which is adapted to coordinate the exchange of data within the cluster control and coordination means.

The cluster may also correspond to a heterogeneous or homogeneous network of computers operated so as to function as nodes in a cluster.

The job engine is preferably adapted to coordinate the exchange of data between the cluster management database, a scheduling means for scheduling the jobs on the cluster, a cluster management means for managing the cluster nodes.

In an alternative aspect, the invention provides for a web-based user interface for a cluster management system which is adapted to manage a remote cluster by means of a cluster control and coordination means associated with the cluster, the cluster control and coordination means itself preferably adapted to:
(a) receive user and job information via the web-based user interface said user interface adapted to both operate in a network environment and to provide a interface by which a user manages one or more jobs running on the cluster and to communicate user and job information to the cluster;
(b) coordinate the operation of the components which constitute the cluster management system;
(c) schedule jobs for running on nodes of the cluster; and
(d) manage the distribution of the jobs to the nodes of the cluster.

The web-based user interface for a cluster management system is preferably further adapted to communicate data or reference to data related to the job between the user and the cluster.

The data or reference to the data is preferably communicated via email.

In yet a further aspect, the invention provides for a method of controlling a remote cluster preferably including the steps of:
(e) a user communicating information relating to a job for running on a cluster to a remote cluster control system via a web-based interface;
(f) the remote cluster control system coordinating the operation of the cluster by dynamically storing, organizing and communicating the appropriate information to the cluster and retrieving the results of the job;
(g) once the job has been completed, communicating the results to a data communication means; and
(h) communicating the results to the user.

The results may be communicated to the user by means adapted to be transparent to any intervening firewalls or network connections.

The remote cluster control system coordinates the operation of the remote cluster by means of a job engine which is preferably adapted to, where applicable, handle communications between nodes of the cluster, a database for storing information relating to the job and a messaging means adapted to communicate the results of the job to the user.

### Brief Description of the Drawings

The present invention will now be described by way of example only and with reference to the drawings in which:
- Figure 1:: illustrates a simplified schematic of the information flow between a user and a remote HTTP server;
- Figure 2:: illustrates a simplified schematic of the details of the data flow in a remote cluster showing communication between an HTTP interface, a job engine and cluster management database;
- Figure 3:: illustrates a simplified schematic of the details of the data flow in a remote cluster showing communication between a cluster management database, job engine and a cluster job scheduler;
- Figure 4:: illustrates a simplified schematic of the details of the data flow in a remote cluster showing communication between a cluster management database, cluster manager and a cluster via resource management software;
- Figure 5:: illustrates a simplified schematic of the details of the data flow in a remote cluster showing communication between a cluster, HTTP server, job engine and a cluster management database;
- Figure 6:: illustrates a simplified schematic of the details of the data flow in a remote cluster showing communication between a job engine and a SMTP server and ultimately a user; and

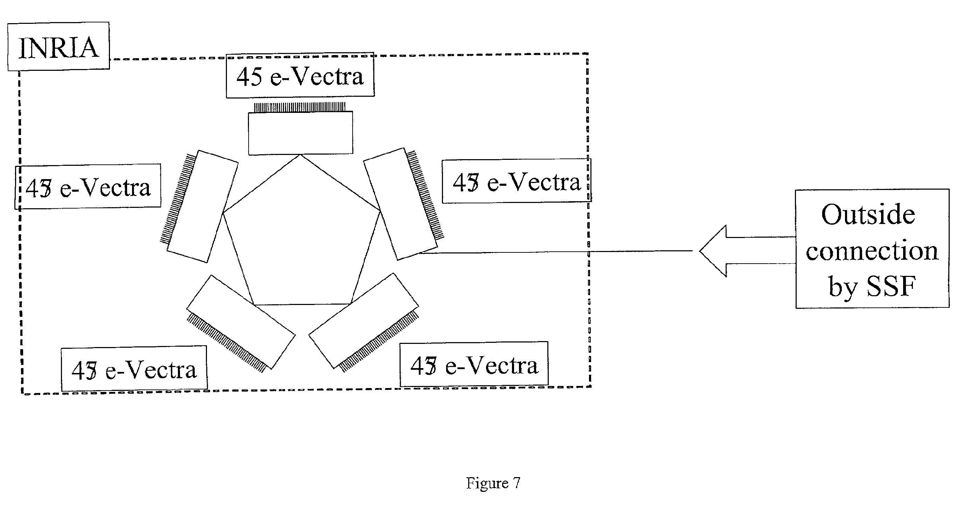

- Figure 7:: illustrates a simplified cluster formed from 5 groups of 45 Hewlett Packard e-Vectra computers.

### Best Mode for Carrying Out the Invention

The present invention will be described in the context of a cluster located at a remote site. The applicants prototype cluster management system has been developed at INRIA (The French National Institute For Research In Computer Science And Control) and is formed from a network of 225 Hewlett Packard e-Vectra computers. Of course this selection of computer type and number is not to be considered as limiting as there are a number of types of computers which are capable of serving as nodes in a cluster and also various hardware configurations which can constitute a cluster.

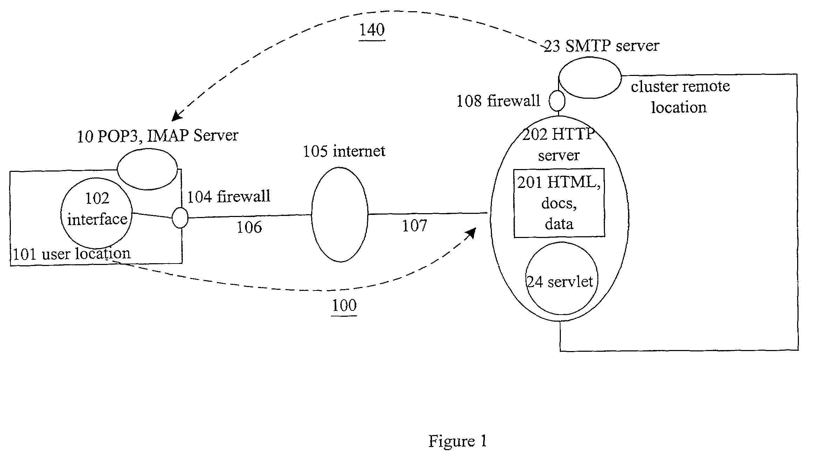

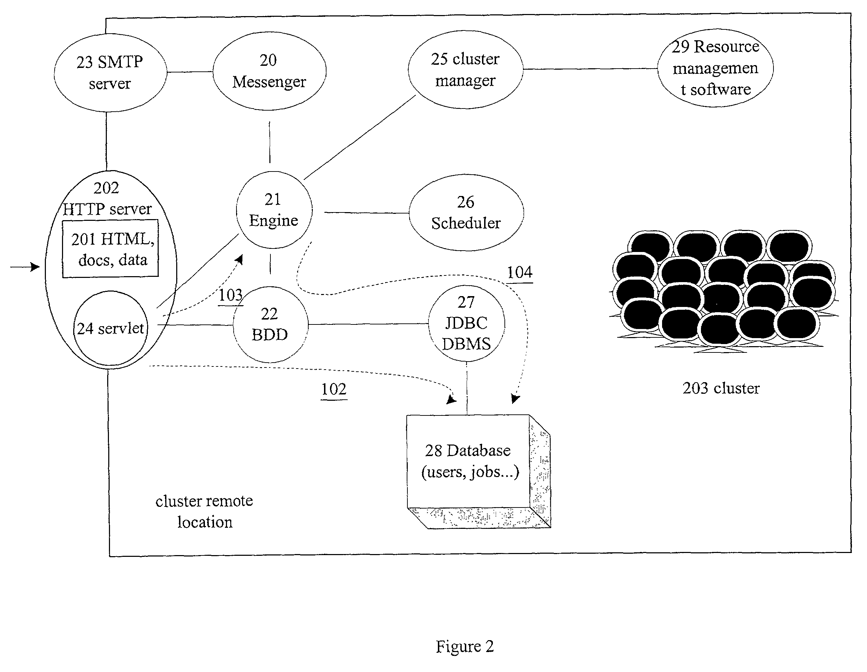

Referring initially to figures 1 and 2, an overview of an exemplary embodiment of the invention is as follows.

A users location is schematically shown at the left of figure 1 and includes a notional computing space indicated by the numeral 101. The user interacts with the system via a computer incorporating a user interface 102. This allows a user to manage the one or more jobs running on the cluster. The user interface is in the present example may be an application such as a web browser or email interface running on a computer. The machine can be in the form of a standalone PC, a workstation or a server. In the latter case, the job may be run in a batch mode style.

The user interface computer hardware is connected to a communications network via a network connection. Various types of network connection paradigms are known in the art. In the present example, the communications network corresponds to the internet whereby communications are effected by means of the TCP/IP. Details and implementations of TCP/IP networks and the internet are well known to those skilled in the relevant technical fields and, for brevity, will not be discussed here in detail. Other networks, for example intranets, may be amenable to the invention.

The user computing location 101 is connected to cluster control and coordination means (components 21 to 202 in figure 2), and hence the cluster, by means of a network connection via the internet 105. This allows the user to be physically located anywhere where an internet connection is available.

Referring to figure 1, the TCP/IP connection at the user computer location and the cluster must pass through firewalls. Each firewall (104, 108) is administered by respective site authorities and conform to the prevailing firewall protocols. Details of firewall operation are known to those in the art and will not be discussed in detail.

Firewalls block incoming telnet or rlogin connections and thus serve as security barriers which isolate the computer systems behind them from unauthorised communications. However, firewalls admit HTTP or mail traffic (for example via the SMTP) and thus a remote user can access the resources behind the firewall, albeit in a confined manner.

The cluster control and coordination means in the present example includes a cluster front end in the form of an HTTP server 202 which is connected to the internet via a network connection 107. The HTTP server 202 incorporates a file area 201 which handles the administration and front-end functionality of the HTTP server 202. Superficially, the server 202 is configured in a standard manner to provide a web-based server interface which is accessible from a remote web-based client interface 102. The cluster control and coordination means serves to communicate user and job information from the HTTP server-side interface to the cluster, coordinate the operation of the components of the server-side interface/system, schedule jobs for running on the cluster and communicate the results to the user.

In the present embodiment, this functionality is provided by means of the following components or modules. It is to be understood that the presently described configuration is exemplary only and there exist other arrangements of hardware which can be configured to achieve the required control and coordination.

The server-side web interface 201 and 202 receives information from the user and communicates this to a servlet 24. A servlet is a program written in Java which runs on a web server. In this case, the servlet 24 is used as the interface between the server-side web-based part of the system and the rest of the cluster management system. The servlet 24 receives external requests from the user by way of the HTTP server. These include login requests and job requests. The servlet 24 communicates with a database management system 22, 27 and 28. In the present implementation, the database is preferably driven by an API called JDBC or 'Java Data Base Connectivity' by way of module BDD 22. The BDD module 22 is an object which provides a high level interface between other objects in the system and the database. This saves the need for direct SQL instructions between the servlet and the engine and the JDBC database. An API is an application programmer interface and specifies the communication between an application program and a utility program. The Database stores information about users, jobs and other data related to the operation of the cluster.

A job engine 21 coordinates the system functions by supporting the information exchange between the different modules of the cluster management system The engine 21 does this by means of an API.

A scheduler 26 communicates with the job engine 21 in order to take jobs from the database 28 and assign them to parallel machine nodes in the cluster 203.

A cluster manager 25 serves as a front end for the cluster 203. It allocates jobs to the computational nodes of the cluster and receives their workload state.

A messenger 20 functions so as to send the results to the job owner. It can do this by means of email sent via an SMTP server 23 which can include the results of the calculation or it can send the user an email which includes a uniform resource location (url) at which the user can find the results of the calculation. The system may further include operating system add-ons (not shown) which can provide an API which increases the apparent capacity of the computer linked to an cluster by delegating the cluster to perform some jobs in a transparent way.

In an alternative embodiment, the communications between the web interface 201, 202 and the servlet 24 may be encrypted to provide an increased level of data security.

The operation of the cluster management system will now be summarized with reference to the preferred example, the components of which have been discussed above.

Referring to figure 1, a user submits (100), via a web-based interface 102, a computational job to the server-side web interface 201, 202. The details of the specific content will not be described in detail as the information format and type may vary significantly depending on the nature of the job and the specifics of the cluster operating system. In a preferred embodiment, the job is communicated (100) to the cluster control and coordination means by means of the server-side web (HTTP) interface. As can be seen, this renders the firewall 108 transparent or at least makes it possible to secure the system behind the firewall 108 while still passing control and coordination information to the cluster.

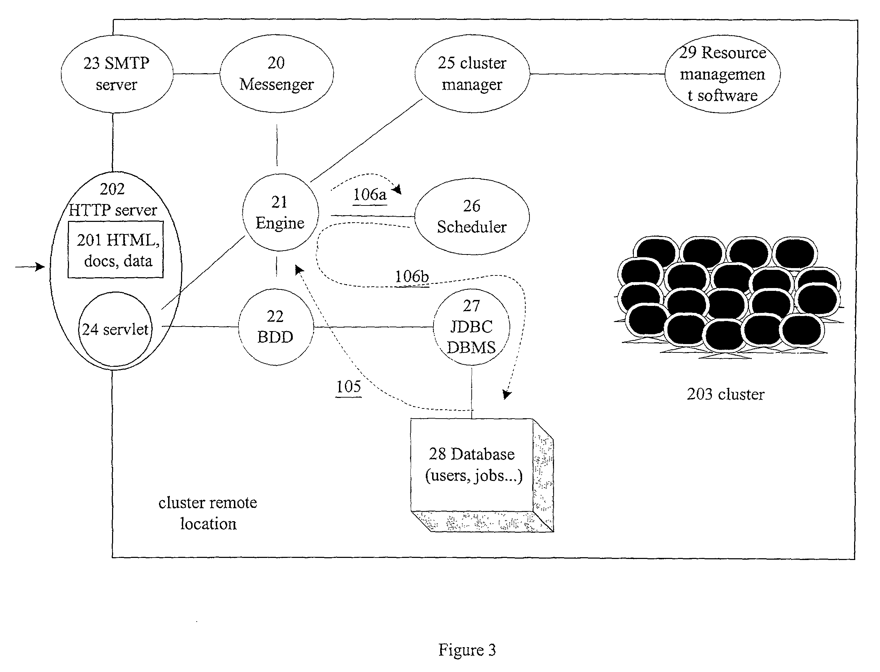

The server-side HTTP interface communicates (102) the job information to the database 28 by means of the servlet 24. The information stored generally includes the job description, data, user information and other support and configuration data as may be required. The database modules 22, 27 and 28 are configured to dynamically store information and data relating to the job or jobs being processed by the cluster and can be thought of as a repository for all and any information (administration, data etc.) which is required for job handling. The servlet 24 also communicates (103) the job information to the job engine 21. This engine 21 coordinates the operation of the modules of the control and coordination system and itself passes information (104) back to the database modules 22, 27, 28 which may then be, in updated, appended or modified form, communicated (105) back to the engine 21 (see figure 3).

The engine 21 then communicates (106a) the appropriate information to the scheduler 26. Scheduling of jobs is usually carried out in two stages. A high-level scheduler collects together a particular job mix that is to be executed at any one time, according to criteria that are thought to allow the system to be optimally used. The scheduling among these jobs on a very fine time scale is the province of the low-level scheduler (or dispatcher), which then allocates processors to processes.

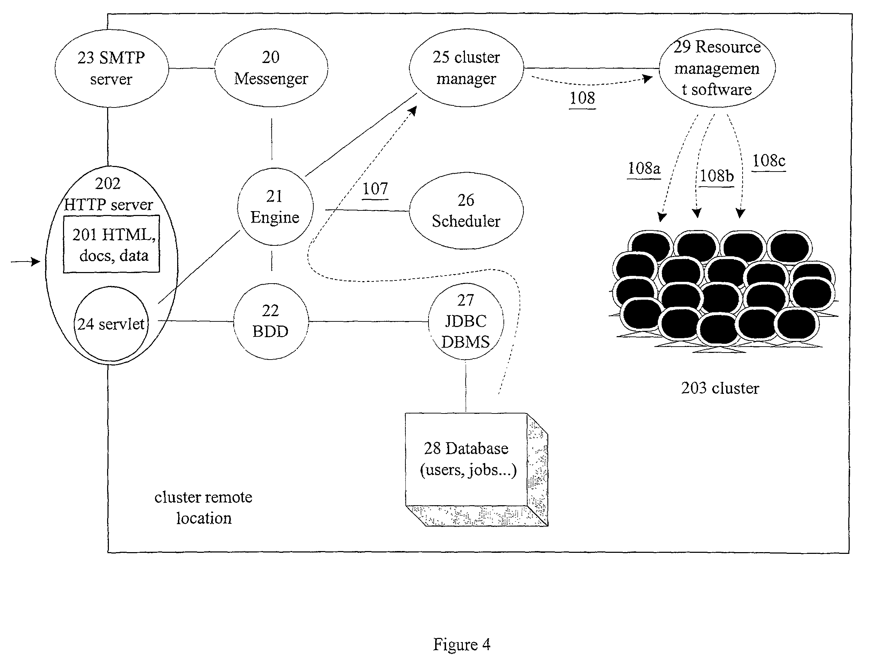

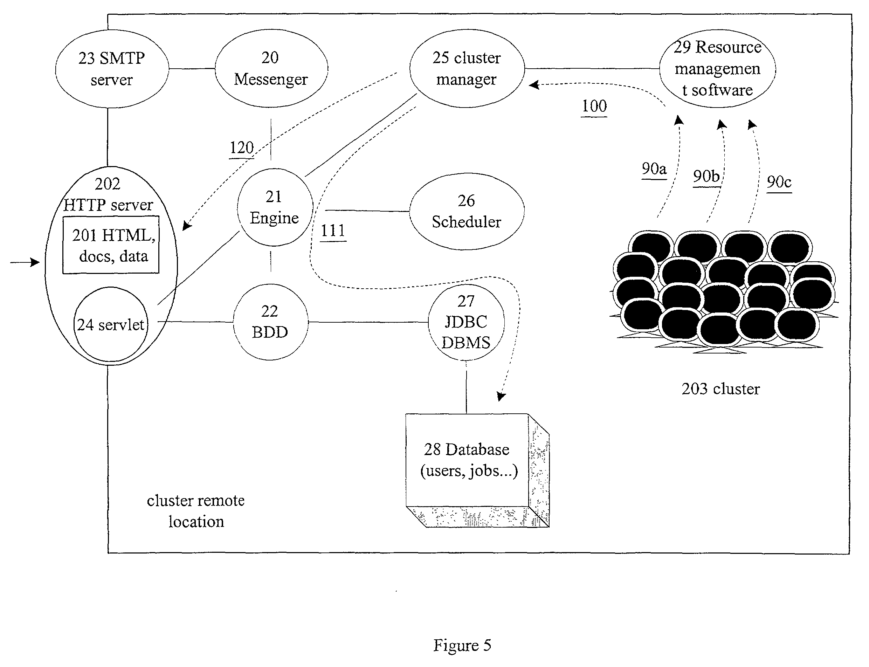

The scheduling information is passed back (106b) to the database 28 via the engine 21 where it is accessible by other modules of the system. The engine 21 then takes information from the database and communicates (107) it to the cluster manager 25 (see figure 4). This is the front end of the cluster 203 and distributes jobs (108a, 108b, 108c) to the computational nodes, via resource management software 29, and receives (90a, 90b, 90c and 100) the workload state of the nodes in the cluster 203 (see figure 5). Workload state and computational result data are then communicated (111) back to the database 28 via the cluster manager 25 wherein the job manager 21 coordinates the transfer of the information.

Job results or intermediary information may be communicated (120) to the HTTP server 202 for access by the user via the network accessible HTTP interface. In this way intermediate results etc may be accessed or further input communicated to the control and coordination means. When the job has finished, the engine 21 communicates (130) the output information from the database 28 to the messenger 20.

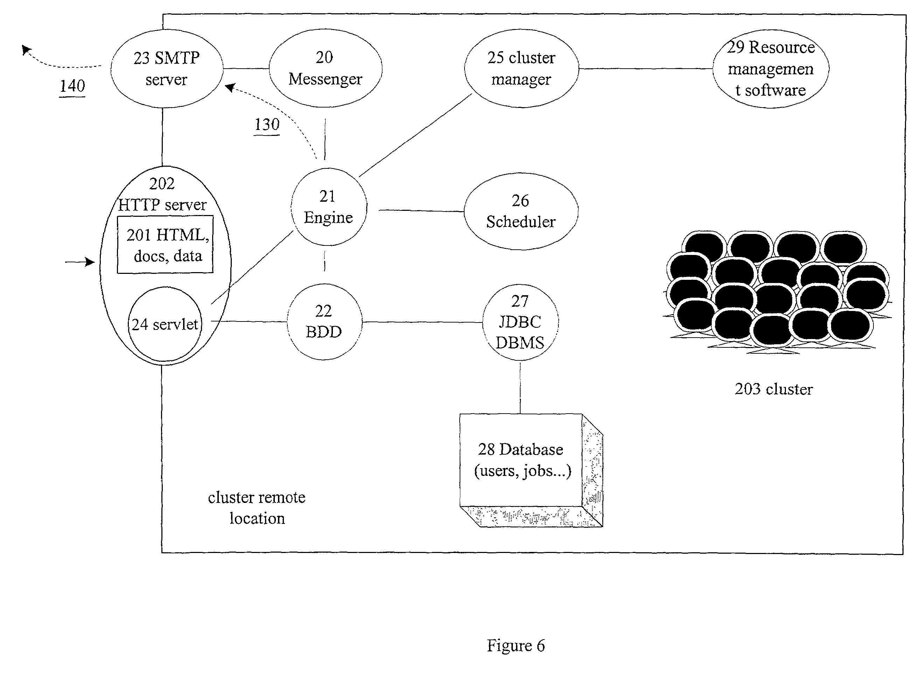

The messenger 20 is an application which is adapted to transmit the output information to the user. In the present embodiment, this application communicates (130 and 140) the results to the user via email using an SMTP server 23 (see figure 6).

A POP3 or IMAP server 103 at the user location receives the email. The user can then access the result via a suitable email application. In an alternative embodiment, the email may contain simply a uniform resource locator pointing to a web-accessible resource on which the results are stored. This function may be preferable where the output information is in the form of a large body of data or is in a form which is to be further processed or requires a specific piece of application software in order for the user to interpret or analyze the output.

The function of the database has been necessarily abbreviated in the present description as the data stored in the database will evolve and initially is likely to contain information about the users and the set of jobs which are to be scheduled.

During operation of the cluster, the database will accumulate intermediate information in a dynamic fashion and will also gather data relating to user profiles and specific scheduling scenario. This data may be used to improve future cluster use forecasting and to refine scheduling techniques.

The modular approach of the prototype system has been adopted as it allows parts of the system to be changed as the system is developed. To this end, the modules have been developed in Java as many API solutions already exist for this language. In any event, this allows the ready implementation of modifications or alternative operating procedures.

In terms of the architecture of the exemplary embodiment a number of design selections have been made. These include using an existing database solution (InstantDB) which has been found to be efficient for the development process. But it is anticipated that it may be replaced with a more durable database solution, for example an Oracle database management system or similar.

The management of the cluster is preferably supported by the Portable Batch System which is driven by the cluster manager module. However, it is envisaged that other embodiments may dispense with the PBS. Also, the prototype embodiment of the scheduler module of the invention implements a FIFO strategy. However, again, future modifications and improvements are envisaged and are considered within the scope of the present invention.

It can be seen that the invention significantly improves user accessibility to a remote cluster. This avoids the user needing to stay connected to wait for results from a lengthy computation or to physically travel to the cluster site or a specific access point. The invention also allows a user to develop or set up a new operating system compatible with cluster use. Further, the use of a dynamically updated database allows the cluster administrator to statistically study the behavior of the users in order to detect trends which may be useful in refining scheduling algorithms and procedures.

The invention is also advantageous in that the user is given freer access to the computing facilities without requiring modifications to the firewall security policies. Further, the use of a web-based client/server interface allows the user to submit jobs via a direct HTTP connection or perhaps by email wherein the email includes information relating to the commands to perform and an input file, possibly as an attachment, to process.

The invention provides some significant commercial advantages in that a customer can access computational power that is potentially very large for a relatively low financial investment. Specifically, the user only need provide a computer linked to the network in order to set up the client side software of the system of the invention in order to access the cluster. Further, the owner of the cluster system is provided with the ability to more easily administrate selling computation time on the cluster as the interface and modular characteristics of the control and coordination system will, it is envisaged, allow auditing and billing systems to be incorporated into the management system.

In this vein, the invention provides a modular architecture which can be used for different operating systems through a Java virtual machine. Thus, there is no need to specifically develop each different environment. It is however envisaged that the present code can be translated into C++ to increase the performance of the system.

Although a specific exemplary physical embodiment of the invention has been described, different modules may be substituted, combined or alternatively arranged. Further, the allocation of tasks in the management system may be distributed in a different manner depending on the specific implementation of the invention. Such variations and their implementation are considered to be within the scope of the present invention.

For the avoidance of doubt, the present invention is not to be construed so as to be specifically restricted to the management of computer clusters according to any restrictive interpretation of this term. The management methods, apparatus and systems described herein are equally applicable to groups of computing devices which can be operated as an aggregate or notional cluster.

For example, it is known that computationally intensive or time-consuming tasks can be divided amongst disparate computing hardware by exploiting the idle time of such machines. An example might be a computationally intensive molecular modeling program run on a large number of desktop PCs. Desktop PCs spend a significant proportion of their lives idle. Techniques have been proposed to exploit this idle capacity by dividing a large computing task into many smaller jobs. These jobs are then run on a plurality of desktop PCs. This is usually done in such a way that each individual PC user is either unaware or it has minimal impact on his or her activities.

This invention may be implemented on such systems with suitable modifications taking into account, for example, the processor types of the node machines, their operating system, availability and the like.

Accordingly, throughout this specification and claims, it is to be clearly understood that any and all references to "clusters" are to include within their scope any aggregate of computers which may be amenable to the management system and method which is described herein. The cluster may be a heterogeneous or homogeneous physically disparate group of computers whereby the clustering nature of the aggregate arises out of the computers participation in a particular task.

Although the invention has been described by way of example and with reference to particular embodiments it is to be understood that modification and/or improvements may be made without departing from the scope of the appended claims.

Where in the foregoing description reference has been made to integers or elements having known equivalents, then such equivalents are herein incorporated as if individually set forth.

## Claims

1. A cluster management system, including:
(a) cluster control and coordination means, adapted to:
(i) receive user and job information via a user interface said interface adapted to provide a interface by which a user manages one or more jobs running on the cluster and to communicate user and job information to the cluster;
(ii) coordinate the operation of the components which constitute the cluster management system;
(iii) schedule jobs for running on nodes of the cluster;
(iv) manage the distribution of the jobs to the nodes of the cluster; and
(b) messaging means adapted to communicate data related to the job between the user and the cluster.

2. A cluster management system as claimed in claim 1 wherein the user interface is adapted to operate in a network environment.

3. A cluster management system as claimed in claim 1 including a cluster management database means adapted to dynamically store information related to the operation of the cluster and cluster management system.

4. A cluster management system as claimed in claim 3 wherein the information includes information about users, scheduling information, jobs and similar.

5. A cluster management system as claimed in claim 1 wherein the cluster control and coordination means is adapted to allow communication with the user interface through a firewall.

6. A cluster management system as claimed in claim 5 wherein communication through the firewall is achieved by way of the HTTP or HTTP-SL.

7. A cluster management system as claimed in claim 1 which includes a HTTP server, adapted to allow communication with the user interface, which includes at least one servlet, the servlet adapted to receive external requests from the user interface and communicate with the cluster management database means to store information about the user, jobs and the like.

8. A cluster management system as claimed in claim 7 wherein the HTTP server is located proximate the cluster control and coordination means.

9. A cluster management system as claimed in claim 8 wherein the HTTP server is within the same secured network environment.

10. A cluster management system as claimed in claim 7 wherein the servlet is adapted to communicate with a job engine which is adapted to coordinate the exchange of data within the cluster control and coordination means.

11. A cluster management system as claimed in claim 10 wherein the job engine is adapted to coordinate the exchange of data between the cluster management database, a scheduling means for scheduling the jobs on the cluster, a cluster management means for managing the cluster nodes.

12. A cluster management system as claimed in claim 11 wherein the job engine manages the cluster nodes via a cluster resource management means.

13. A cluster management system as claimed in claim 1 wherein the messaging means is adapted to receive incoming messages corresponding to user requests and/or communicate the results of the job to a user.

14. A cluster management system as claimed in claim 13 wherein the messaging means is a software entity adapted to use web-based communication methods to transmit the messages between the user location and the cluster management system.

15. A cluster management system as claimed in claim 14 wherein the messaging means communicates with the user by means of web-based communication methods which are passed by any intervening firewall.

16. A cluster management system as claimed in claim 1 wherein the messaging means corresponds to a SMTP server.

17. A cluster management system as claimed in claim 1 wherein the user interface corresponds to a web-based interface.

18. A cluster management system as claimed in claim 1 wherein the user interface communicates with the HTTP server via a network.

19. A cluster management system adapted to receive user input via a remote web-based interface.

20. A web-based user interface for a cluster management system adapted to manage a remote cluster by means of a cluster control and coordination means associated with the cluster, the cluster control and coordination means itself adapted to:
(a) receive user and job information via the web-based user interface said user interface adapted to both operate in a network environment and to provide a interface by which a user manages one or more jobs running on the cluster and to communicate user and job information to the cluster;
(b) coordinate the operation of the components which constitute the cluster management system;
(c) schedule jobs for running on nodes of the cluster; and
(d) manage the distribution of the jobs to the nodes of the cluster.

21. A web-based user interface for a cluster management system as claimed in claim 20, further adapted to communicate data or reference to data related to the job between the user and the cluster.

22. A web-based user interface for a cluster management system as claimed in claim 21 wherein the data or reference to the data is communicated via email.

23. A method of controlling a remote cluster including the steps of:
(a) a user communicating information relating to a job for running on a cluster to a remote cluster control system via a web-based interface;
(b) the remote cluster control system coordinating the operation of the cluster by dynamically storing, organizing and communicating the appropriate information to the cluster and retrieving the results of the job;
(c) once the job has been completed, communicating the results to a data communication means; and
(d) communicating the results to the user.

24. A method of controlling a remote cluster as claimed in claim 23 wherein the results are communicated to the user by means adapted to be transparent to any intervening firewalls or network connections.

25. A method of controlling a remote cluster as claimed in claim 24 wherein the results are communicated to the user via a SMTP server.

26. A method of controlling a remote cluster as claimed in claim 23 wherein the remote cluster control system coordinates the operation of the remote cluster by means of a job engine which is adapted to, where applicable, handle communications between nodes of the cluster, a database for storing information relating to the job and a messaging means adapted to communicate the results of the job to the user.

27. A management system for a plurality of computing means, including:
(a) control and coordination means, adapted to:
a. receive user and job information via a user interface said interface adapted to provide a interface by which a user manages one or more jobs running on the plurality of computing means and to communicate user and job information to the plurality of computing means;
b. coordinate the operation of the components which constitute the plurality of computing means management system;
c. schedule jobs for running on each of the computing means;
d. manage the distribution of the jobs to the computing means; and
(b) messaging means adapted to communicate data related to the job between the user and the plurality of computing means.
